# EUROPEAN PATENT APPLICATION

(11) **EP 2 482 505 A1**
(43) Date of publication of application: **01.08.2012**
(21) Application number: 11152287.6
(22) Date of filing: 26.01.2011
(51) Int. Cl.: H04L 12/58

(54) **Communication device and method for sending an electronic message**

(71) Applicant: Research In Motion Limited, Waterloo, ON N2L 3W8 (CA)
(72) Inventor: Vandeputte, Casey Jonathan, Waterloo Ontario N2L 3L3 (CA)
(74) Representative: Moore, Barry

(57) **Abstract**

A communication device includes: a processor for rendering a message list for display on a display screen in communication with the processor, the message list comprising indications of electronic messages received by the communication device; and an input device in communication with the processor, the processor configured to receive input from the input device to select at least one electronic message from the message list, and further configured to send identification of an electronic address associated with the at least one electronic message and an out-of-office reply setting to a messaging server, the messaging server for generating and sending an out-of-office notification to the electronic address.

## Description

### Technical Field

The present disclosure relates to communication devices capable of sending and receiving electronic messages.

### Background

Many messaging applications allow users to specify an "out-of-office" reply message. In some email applications, for example, when an out-of-office notification is turned on, email senders are automatically notified via return email message that the recipient is unavailable. The content of the return email message can be specified by the recipient and can indicate when the recipient is set to return to the office or otherwise become available.

Improved and additional techniques for handling messages when a user is not available to reply are desirable.

### Summary

In an aspect, there is provided herein a communication device comprising: a processor configured to render a message list for display on a display screen in communication with the processor, the message list comprising indications of electronic messages received by the communication device; and an input device in communication with the processor, the processor further configured to receive input from the input device to select at least one electronic message from the message list, and further configured to send identification of an electronic address associated with the at least one electronic message and an out-of-office reply setting to a messaging server, the messaging server being configured to generate and send an out-of-office notification to the electronic address.

In another aspect there is provided a communication device wherein when the at least one message was received by the communication device, the out-of-office reply setting was inactive.

In still another aspect there is provided a communication device wherein the processor is further configured to select the at least one electronic message by receiving input indicating a time of day prior to the at least one electronic message being received.

In still another aspect there is provided a communication device wherein the processor is further configured to select the at least one electronic message by receiving input indicating a block of time that includes the time at which the at least one electronic message was received, the block of time being customizable.

In still another aspect there is provided a communication device wherein the processor is further configured to send a message ID of the at least one electronic message to the messaging server.

In still another aspect there is provided a communication device wherein the communication device is one of: a handheld device, a laptop computer or a desktop computer.

In still another aspect there is provided a method including: receiving, at a messaging client, a selection of at least one electronic message previously received by the messaging client, the at least one electronic message being associated with an electronic address; and in response to receiving the selection providing identification of the electronic address and identification of an out-of-office setting to a messaging server, the messaging server configured to generate and send an out-of-office notification to the electronic address.

In still another aspect there is provided a method including: receiving, at a messaging server, an input identifying at least one electronic message previously received by a messaging client; receiving, at the messaging server, an input indentifying an out-of-office setting to be applied to the at least one electronic message; and generating and sending an out-of-office notification to an electronic address associated with the at least one electronic message.

In still another aspect there is provided a method wherein when the at least one message was received by the messaging client, the out-of-office reply setting was inactive.

In still another aspect there is provided a method wherein the at least one electronic message is selected from a list of received messages, the list of received messages being rendered for display on a display screen of a communication device.

In still another aspect there is provided a method wherein the at least one electronic message is selected using an input device of the communication device.

In still another aspect there is provided a method wherein the at least one electronic message is selected by receiving input indicating a time of day prior to the at least one electronic message being received.

In still another aspect there is provided a method wherein the at least one electronic message is selected by receiving input indicating a block of time that includes the time at which the at least one electronic message was received, the block of time being customizable.

In still another aspect there is provided a method wherein providing identification of the electronic message comprises sending a message ID of the at least one electronic message to the messaging server.

In still another aspect there is provided a non-transitory computer-readable medium comprising instructions executable on a processor for implementing the methods disclosed herein.

### Drawings

The following figures set forth embodiments in which like reference numerals denote like parts. Embodiments are illustrated by way of example and not by way of limitation in the accompanying figures.

Figure 1 is a block diagram of an example communication device;

Figure 2 is a front view of the example communication device of Figure 1;

Figure 3 is a block diagram showing general operation of an email system in which a method of sending an email message according to an embodiment can be implemented;

Figure 4A is an isometric view of another example communication device;

Figure 4B is a front view of still another example communication device;

Figure 5A is a view of a display screen showing a home screen;

Figure 5B is a view of a display screen showing a user interface of an email client;

Figure 6 is a flowchart depicting a method of sending an email message according to an embodiment;

Figure 7 is a flowchart depicting client-side operation of the method of Figure 6;

Figure 8A is a view of a display screen showing user selection of messaging options from an email client;

Figure 8B is a view of a display screen showing a retroactive out-of-office function menu option; and

Figure 9 is a view of a display screen showing message selection options from the retroactive out-of-office function.

### Detailed Description

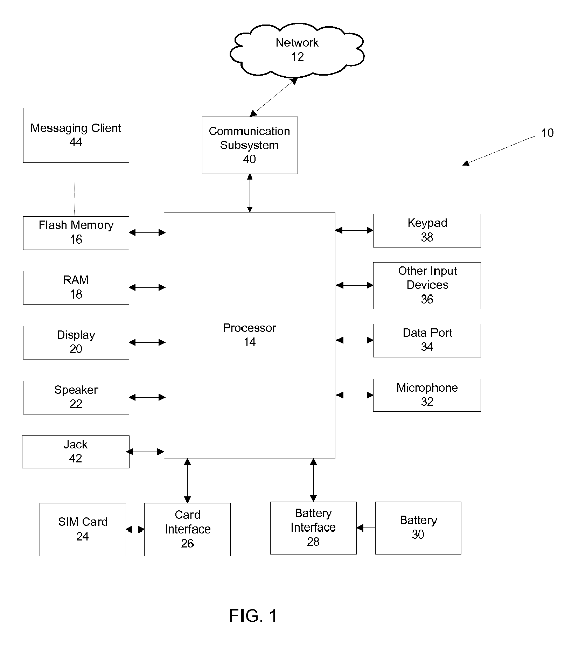

Referring now to Figure 1, components of an example communication device 10 are generally shown. The communication device 10 is generally a handheld device and includes data communication capabilities and can communicate with other electronic devices directly or through a wireless network. The communication device 10 is based on the computing environment and functionality of a handheld computer, such as a wireless personal digital assistant (PDA), for example. It will be understood, however, that the communication device 10 is not limited to a wireless personal digital assistant. Other handheld devices are possible, such as cellular telephones, smart telephones, electronic messaging devices, music players, gaming devices, remote controls and laptop computers, for example.

The handheld device includes a number of components including a processor 14, which controls the overall operation of the device 10. A communication subsystem 40 controls data and voice communication functions, such as email, PIN (Personal Identification Number) message functions, SMS (Short Message Service) message functions and cellular telephone functions, for example. The communication subsystem 40 is in communication with a wireless network 12, which can be a data-centric wireless network, a voice-centric wireless network or a dual-mode wireless network.

In Figure 1, the communication subsystem 40 is a dual-mode wireless network that supports both voice and data communications. The communication subsystem 40 is configured in accordance with the Global System for Mobile Communication (GSM) and General Packet Radio Services (GPRS) standards. The communication subsystem 40 can alternatively be configured in accordance with Enhanced Data GSM Environment (EDGE) or Universal Mobile Telecommunications Service (UMTS) standards. Other wireless networks can also be associated with the handheld device, including Code Division Multiple Access (CDMA) or CDMA2000 networks. Some other examples of data-centric networks include WiFi 802.11, Mobitex™ and DataTAC™ network communication systems. Examples of other voice-centric data networks include Personal Communication Systems (PCS) networks like GSM and Time Division Multiple Access (TDMA) systems.

The wireless network 12 includes base stations (not shown) that provide a wireless link to the handheld device. Each base station defines a coverage area, or cell, within which communications between the base station and the handheld device can be effected. It will be appreciated that the handheld device is movable within the cell and can be moved to coverage areas defined by other cells. Data is delivered to the handheld device via wireless transmission from the base station. Similarly, data is sent from the handheld device via wireless transmission to the base station.

The communication subsystem 40 further includes a short range communications function, which enables the device 10 to communicate directly with other devices and computer systems without the use of the wireless network 12 through infrared or Bluetooth™ technology, for example.

Prior to the handheld device being able to send and receive communication signals over the wireless network 12, network registration or activation procedures typically have been completed. In order to enable network communication, a SIM (Subscriber Identity Module) card 24 is inserted into a card interface 26. The SIM card, or Removable User Identity Module card, is used to identify the user of the handheld device, store personal device settings and enable access to network services, such as email and voice mail, for example, and is not bound to a particular handheld device.

The processor 14 is also connected to a flash memory 16 and a Random Access Memory (RAM) 18. An operating system and device software are typically stored in flash memory 16 and are executable by the processor 14. Some device software components can alternatively be stored in RAM 18. The handheld device includes computer executable programmed instructions for directing the handheld device to implement various applications. Some examples of applications that can be stored on and executed by the device 10 include: calendar, address book, games and music player applications and a messaging client 44 for sending and receiving electronic messages. Software applications that control basic device operation, such as voice and data communication, are typically installed during manufacture of the device 10. For devices that do not include a SIM card 24, user identification information can be programmed into the flash memory 16. The flash memory 16 can alternatively be a persistent storage, a Read-Only Memory (ROM) or other non-volatile storage.

The processor 14 receives input from an input device, such as a keypad 38, which can be a complete alphanumeric keypad or telephone-type keypad. The processor 14 can further receive input from other input devices 36, such as single or multi-function buttons, a touch screen, a mouse, a trackball, an optical track pad, a capacitive touch sensor or a roller wheel with dynamic button pressing capability, for example. The other input devices 36 can replace or complement the keypad 38 to facilitate input. The handheld device of Figure 1 is shown by way of example and it will be appreciated by a person skilled in the art that many different device types, shapes and input device configurations are possible.

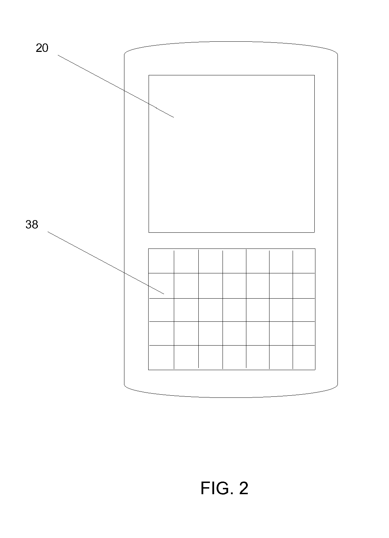

Referring to also to Figure 2, the processor 14 outputs to various output devices including a Liquid Crystal Display (LCD) or other type of display screen 20. A microphone 32 and speaker 22 are connected to the processor 14 for cellular telephone functions. A data port 34 is connected to the processor 14 for enabling data communication between the handheld device and another computing device. Battery interface 28 enables communication between one or more rechargeable batteries 30 and the processor 14. The data port 34 can be incorporated into a battery charging interface (not shown) to provide data lines for data transfer and a supply line for charging a battery 30 of the portable device 10.

The handheld device is operable in a data communication mode and a voice communication mode. In the data communication mode, a received data signal representing information such as a text message, an email message, a media file to be transferred, or web page download is processed by the communication subsystem 40 and input to the processor 14. The processor 14 further processes the signal and renders images for display on the display screen 20. Alternatively, the processed signals can be output to another computing device through the data port 34. In order to transmit information in the data communication mode, the user of the handheld device composes information for transmission, such as email messages, for example, using the keypad 38 and other input devices 36 in conjunction with the display screen 20. The composed information is transmitted through the communication subsystem 40 over the wireless network 12 or via short range communications. Operation of the handheld device in the voice communication mode is similar to the data communication mode, however, the received signals are output to the speaker 22, or an auxiliary device such as a headset or headphones, and signals for transmission are generated by the microphone 32. The handheld device can also include other voice subsystems, such as a voice message recording subsystem, for example. Jack 42 is provided for receiving an audio accessory such as headphones, a headset, amplified speakers or amplified headphones, for example. Jack 42 can also receive other accessories such as a multi-media accessory including play, pause, stop and rewind buttons or a TV-out accessory that allows for connection of the handheld device to a TV, for example.

Only a limited number of device subsystems have been described. It will be appreciated by a person skilled in the art that additional subsystems corresponding to additional device features can also be connected to the processor 14.

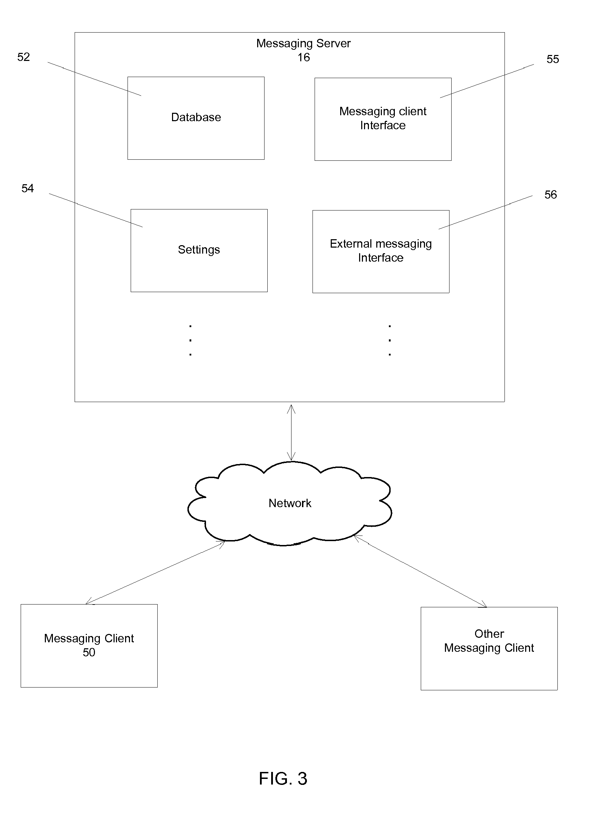

Figure 3 shows the client-server architecture of an example messaging system. As shown, a messaging email client 50 of a messaging server 16 communicates with the messaging server 16 via a network. The network can be a wireless network or a wired network and can be a LAN (Local Area Network), a WAN (Wide Area Network) or other network, for example. All incoming messages of the messaging client 50 are received by the messaging server 16, stored on the messaging server 16 and forwarded to the messaging client 50. Similarly, all outgoing messages of the messaging client 50 are received by the messaging server 16, stored on the messaging server 16 and forwarded to an electronic address. In one embodiment, messages are deleted from the messaging server 16 after incoming messages are received by the messaging client 50 or when outgoing messages are sent to an electronic address.

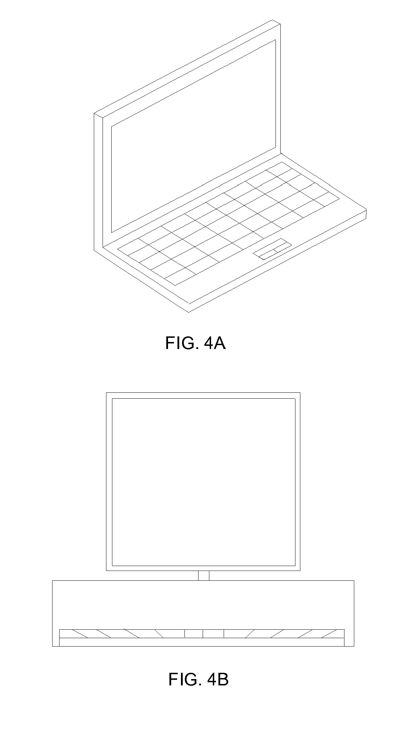

In one embodiment, the messaging client 50 is stored on the handheld device. Referring to Figure 4A, in another embodiment, the messaging client 50 is stored on a laptop computer. Referring to Figure 4B, in another embodiment, the messaging client 50 is stored on a desktop computer. When the messaging system is an email system, examples of email clients include: Mac OS X Mail™, Outlook Express™, Entourage™, Outlook™, and Outlook Web App™, mobile messaging applications or mobile versions of the aforementioned applications, or any suitable messaging application that can be stored on a computing device.

In order to interact with the user interface of the messaging client 50, the user can use one or more input devices to navigate a message list that has been rendered for display and select at least one message therefrom. For the handheld device embodiment, the input device can be the keypad 38 or one or more of the other input devices 36 that have been described in relation to Figures 1 and 2. For the laptop computer and desktop computer embodiments, the input device can be a keyboard, a mouse, a touch pad or another selection device, for example.

Referring still to Figure 3, the messaging server 16 includes a database 52 for storing user account information, a settings application 54, which is accessed in order to apply settings to incoming and outgoing messages associated with users' messaging accounts. A messaging client interface 55 and an external messaging interface 56 are also provided.

The settings application 54 executes settings that are stored on the messaging server 16. Settings can be applied to both incoming and outgoing messages of the messaging client 50. Settings can be implemented for a variety of different applications. For example, an email message can be automatically processed and filtered, routed or replied to in order to adhere to applicable laws, regulations, best practices or personal preferences. As a further example, many email clients include settings for handling unsolicited email messages, which are often referred to as "spam". Often settings for routing the spam email messages to a junk email folder are employed.

Settings are generally stored at and processed by the messaging server 16. Some settings, however, can be stored and processed locally at the messaging client 50. One example of a setting that is stored and processed at the messaging client 50 is a setting that automatically moves messages having a predefined phrase in the body field thereof to a particular folder accessible solely by the messaging client 50.

An automatic reply setting that is often implemented in email applications is the "out-of-office" notification. This setting causes a reply to be automatically sent for each email message that is destined for the messaging client 50. The out-of-office setting is stored at and executed by the messaging server 16. Upon receipt of an incoming email message at the messaging server 16, the settings application 54 generates an out-of-office email message and sends the out-of-office email message to the address of the incoming email message sender. Because the setting is executed at the messaging server 16, the out-of-office notifications do not appear as sent items at the messaging client 50. Out of office notifications can be sent for every email message received by the messaging client 50. Alternatively, out of office notifications can be sent only for the first email message received from a particular sender so that successive messages from that sender do not trigger an out-of-office notification.

The messaging client 50 includes an out-of-office notification option that can be set to ON or OFF. When out-of-office is ON, the messaging server 16 automatically generates and sends an out-of-office email message for email messages destined for the messaging client 50. When out-of-office is OFF, no such messages are sent. In order to turn ON the out-of-office function, a user selects an out-of-office notification option from within the messaging client 50 by actuating the input device to access a menu, navigating through the menu, highlighting the out-of-office notification option and actuating the input device again to select the out-of-office notification option. The out-of-office notification option can include an option to turn ON and OFF at a predetermined time and/or date.

Out-of-office email messages are generated using information that is stored as part of the out-of-office setting. The information can include a message for inclusion in the message body field of the out-of-office email message. Typical out-of-office reply messages include alternate contact information or an alternate point of contact as well as an expected date for the user's return to the office.

Additional information can also be provided including flags and header information for interpretation by the messaging server 16 and messaging client of the sender to affect how the out-of-office email message is displayed, for example.

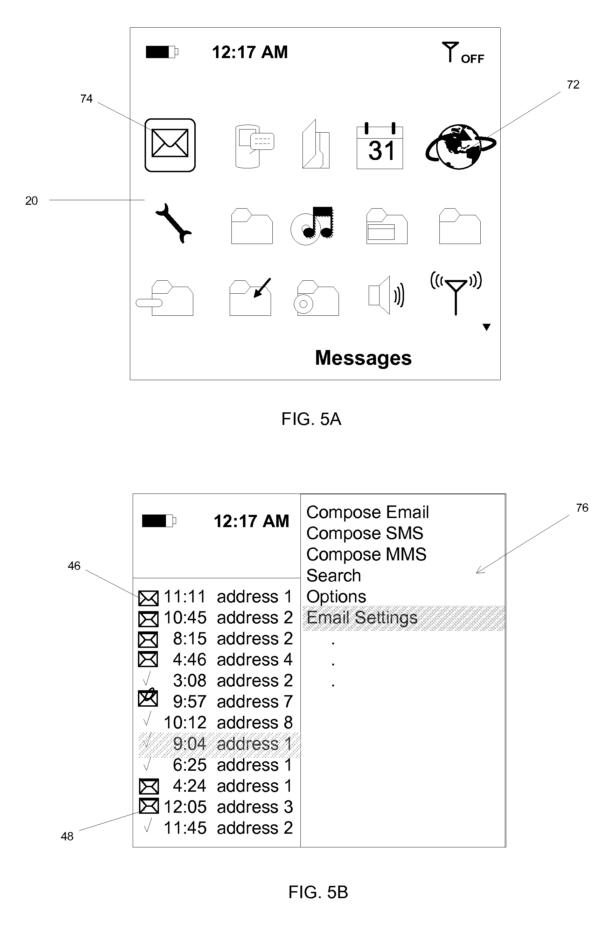

Referring to Figure 5A, a home screen of the handheld device of Figure 2 includes a plurality of interactive icons 72. By selecting an email client icon 74 and actuating the input device, a user can launch the messaging client 50. Referring to Figure 5B, once the messaging client 50 has been launched, a user can compose, send and receive email messages using the messaging client 50. As shown, the user interface of the messaging client 50 of the handheld device typically includes a message list including received and/or sent email messages. Email messages can be opened in a new window by selecting the email message and actuating the input device, for example. Unopened email messages are differentiated from previously viewed email messages so that the user is able to quickly determine which email messages have already been read. In the user interface of Figure 5B, the unopened email messages include an unopened message icon 46 and opened messages include an opened message icon 48. Email messages that are automatically generated out-of-office replies are generally identified with a different icon. A menu 76 can be displayed by actuating the input device.

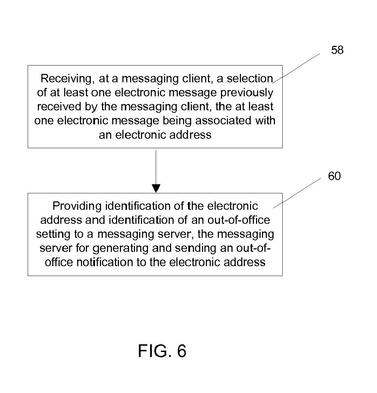

As shown in Figure 6, a method of sending an electronic message is generally shown. The method allows users to send a retroactive out-of-office notification to senders of selected messages. The method includes: at step 58, receiving, at a messaging client 50, a selection of at least one electronic message previously received by the messaging client 50, the at least one electronic message being associated with an electronic address. Then, at step 60, in response to receiving the selection, providing the electronic address and identification of an out-of-office setting to a messaging server 16, the messaging server 16 for generating and sending an out-of-office notification to the electronic address.

The messaging server 16 receives a list identifying at least one electronic message and then generates and sends a notification to the electronic address. Retroactive out-of-office notifications are intended to appear as regular out-of-office notifications when received by the initial message sender.

In order to select messages for retroactive out-of-office notification, a user can i) select messages by scrolling through a message list and highlighting or otherwise identifying selected messages; ii) input a time of day after which all messages should be selected; or iii) input a length of time to be subtracted from a current time to select all messages within that block of time. The length of the block of time being customizable by the user.

In order to select messages by scrolling through a messages list, a user highlights a desired message using the input device and actuates a button, for example, to indicate the selection. Depending on the user interface, selection of multiple messages can be performed in a number of ways. Where checkboxes are provided beside the messages, the user can select the checkboxes of one or more messages using the input device. Alternatively, if user interface is operating a Windows™-type environment, the user can select multiple messages by holding the CONTROL key and clicking a selection key on the keyboard. In a touch screen interface, the user can highlight multiple messages by touching the desired messages and then selecting "Done".

It will be appreciated by a person skilled in the art that a user can select a single message, multiple messages or all of the messages in a particular folder, for example.

When selected, the email messages are electronically marked. In one embodiment, electronic marking is performed by compiling the message Identifiers (IDs) that are associated with the selected messages into a list that is sent to the messaging server 16. The message ID can be a number or some other identifier that is unique to each particular message. Message IDs of electronically marked messages can then be compiled in a list that is sent to the messaging server 16.

It will be appreciated by a person skilled in the art that if the user is out of coverage when the messages for retroactive notification are identified, the list of messages IDs can be queued on the handheld device until the handheld device returns to a service area.

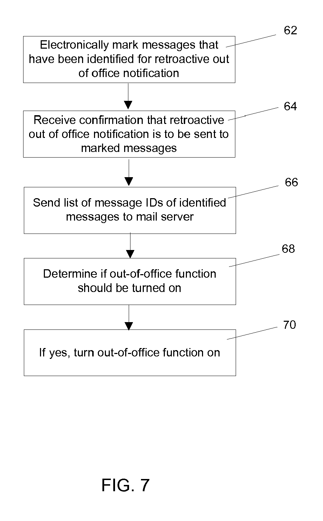

Referring to Figure 7, another method for sending an electronic message is generally shown. The method of Figure 7 is performed by the messaging client 50. At step 62, messages that have been identified for retroactive out-of-office notification are electronically marked. At step 64, the messaging client 50 receives confirmation from the user that the retroactive out-of-office notification is to be sent to the identified messages. At step 66, a list of message IDs associated with the identified messages is sent to the messaging server 16 to allow the messaging server to generate and send the retroactive out-of-office notifications to the senders of the identified messages. As an option, the messaging client 50 can then determine if the out-of-office function should be turned ON, as indicated at step 68. The messaging client can do this by presenting a prompt to the user, such as a pop-up window, for example. At step 70, if the messaging client receives user input indicating that the user would like to turn the out-of-office function ON, then the messaging client 50 turns the out-of-office function ON.

In one embodiment, the messaging client 50 sends the message sender's electronic address to the messaging server 16 instead of a message ID. The messaging server 16 then generates and sends the retroactive out-of-office notification. This embodiment is suitable for email systems in which messages on the messaging server 16 are deleted when the email messages are retrieved by the messaging client.

In another embodiment, the retroactive out-of-office reply setting is stored at the messaging client 50. In this embodiment, the out-of-office notification is generated at the messaging client 50 and sent to the electronic address via the messaging server 16. The method includes: identifying at least one electronic message previously saved in association with the messaging client 50; and generating and sending an out-of-office notification to an electronic address associated with the at least one electronic message. This embodiment allows the messaging client 50 to send the retroactive out-of-office reply message when the messaging server 16 is not configured to support the application of a setting to one message.

Retroactive out-of-office notification can be combined with an existing out-of-office function or implemented as an independent setting. On handheld devices, data can be continuously synchronized with data on messaging servers. The handheld device can be synchronized with a messaging server that is provided within an organization's intranet or the handheld device can be synchronized with a messaging server that is provided by an Internet service provider. As such, if the out-of-office function is running on the messaging server 16, the messaging client 50 will be aware. In one embodiment, when a user turns the out-of-office function ON, a prompt asks the user if the user would like to select messages for retroactive out-of-office notification.

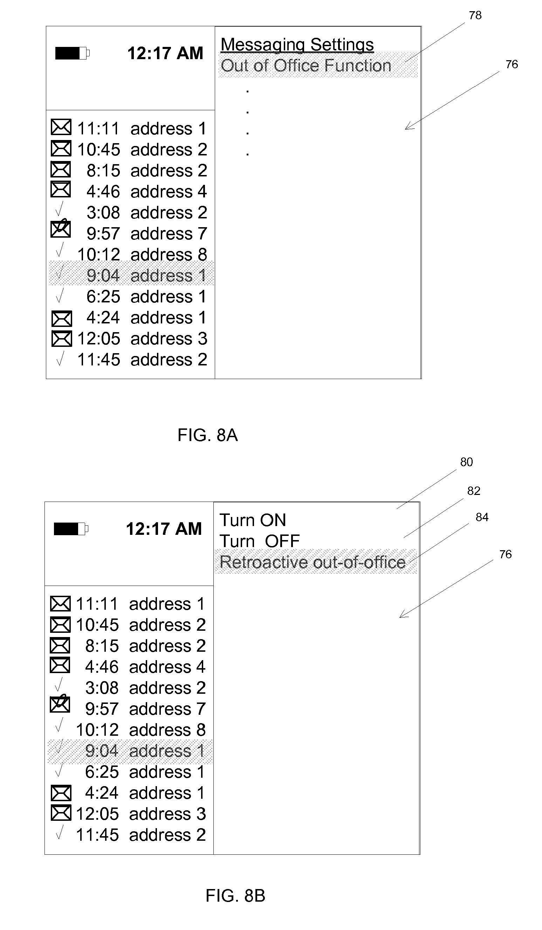

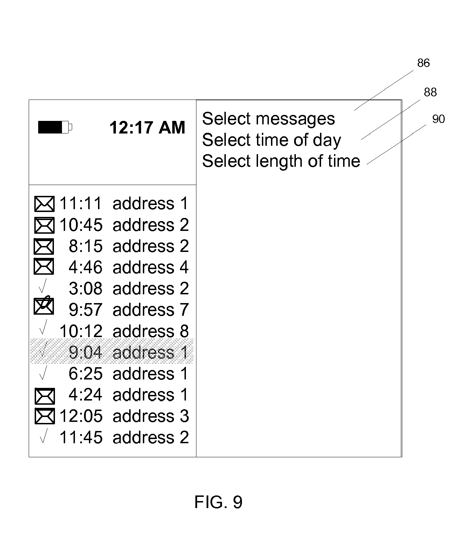

In another embodiment, which is shown in Figures 8A, 8B and 9, retroactive out-of-office is implemented as part of the out-of-office function. In operation, as shown in Figure 8A, after the user selects a messaging settings menu option, the user can select an out-of-office function menu option, as indicated by reference numeral 78. As shown in Figure 8B, the user's menu options within the out-of-office function include turn ON, turn OFF and retroactive out-of-office, as indicated by reference numerals 80, 82 and 84, respectively. If the user selects retroactive out-of-office 84, the user then selects the method for identifying the messages from the list of menu options including: select messages 86, select time of day 88 and select length of time 90. Once the messages have been selected, steps 62, 64 and 66 of Figure 7 are performed.

In one embodiment, the user selects the 'turn ON' option from the menu of Figure 8B. The user then specifies a date and a time after which the out-of-office function should be active. If the user specifies a time that is in the past, a prompt will be generated to ask the user to select messages that have been received since the time/date specified. An advantage to this embodiment is that the out-of-office function does not automatically send retroactive out-of-office notifications to senders who can have already received a reply from the user.

A user will typically use the retroactive out-of-office when the user forgets to turn the out-of-office function on before leaving the office, or becoming unavailable, but remembers sometime later. Using the methods described herein, messages received before the user remembers to turn the out-of-office function ON can still be sent an out-of-office notification.

Although there will be a delay in receiving the notification, recipients of the retroactive out-of-office notification will likely attribute the delay to a problem with the messaging system and will not realize that the out-of-office notification was sent retroactively.

The ability to select individual messages rather than sending the out-of-office notification to a block of messages offers the user more flexibility. In cases where the user can have responded to some of the received messages, sending a retroactive out-of-office notification to those senders would be confusing. This is particularly significant if the senders are clients or customers of the user.

In addition, if the user's absence from the office is short, it can be advantageous to send retroactive out-of-office notifications rather than turning on the out-of-office function.

There are many scenarios for which retroactive out-of-office replies are useful. For example, a user can specify exceptions to an out-of-office setting. If the user inadvertently specifies an exception that is too broad, not all of the appropriate senders can be sent the desired automatic reply. Upon realizing this error, the user can select individual messages to which the sender of the messages should receive a reply. The retroactive out-of-office notification would appear in the same format and have the same characteristics as the messages generated by the out-of-office setting.

Specific embodiments have been shown and described herein. However, modifications and variations may occur to those skilled in the art. All such modifications and variations are believed to be within the scope and sphere of the present embodiments.

## Claims

1. A communication device (10) comprising:
a processor (14) configured to render a message list for display on a display screen (20) in communication with the processor (14), the message list comprising indications of electronic messages received by the communication device (10); and
an input device (38) in communication with the processor (14), the processor (14) further configured to receive input from the input device (38) to select at least one electronic message from the message list, and further configured to send identification of an electronic address associated with the at least one electronic message and an out-of-office reply setting to a messaging server (16), the messaging server (16) being configured to generate and send an out-of-office notification to the electronic address.

2. A communication device (10) as claimed in claim 1, wherein when the at least one message was received by the communication device (10), the out-of-office reply setting was inactive.

3. A communication device (10) as claimed in claim 1 or claim 2, wherein the processor (14) is further configured to select the at least one electronic message by receiving input indicating a time of day prior to the at least one electronic message being received.

4. A communication device (10) as claimed in any preceding claim, wherein the processor (14) is further configured to select the at least one electronic message by receiving input indicating a block of time that includes the time at which the at least one electronic message was received, the block of time being customizable.

5. A communication device (10) as claimed in any preceding claim, wherein the processor (14) is further configured to send a message ID of the at least one electronic message to the messaging server (16).

6. A communication device (10) as claimed in any preceding claim, wherein the communication device (10) is one of: a handheld device, a laptop computer or a desktop computer.

7. A method comprising:
receiving, at a messaging client (50), a selection of at least one electronic message previously received by the messaging client (50), the at least one electronic message being associated with an electronic address; and
in response to receiving the selection providing identification of the electronic address and identification of an out-of-office setting to a messaging server (16), the messaging server (16) configured to generate and send an out-of-office notification to the electronic address.

8. A method comprising:
receiving, at a messaging server (16), an input identifying at least one electronic message previously received by a messaging client (50);
receiving, at the messaging server (16), an input indentifying an out-of-office setting to be applied to the at least one electronic message; and
generating and sending an out-of-office notification to an electronic address associated with the at least one electronic message.

9. A method as claimed in claim 7 or claim 8, wherein when the at least one message was received by the messaging client (50), the out-of-office reply setting was inactive.

10. A method as claimed in any one of claims 7 to 9, wherein the at least one electronic message is selected from a list of received messages, the list of received messages being rendered for display on a display screen (20) of a communication device (10).

11. A method as claimed in claim 10, wherein the at least one electronic message is selected using an input device of the communication device (10).

12. A method as claimed in any one of claims 7 to 9, wherein the at least one electronic message is selected by receiving input indicating a time of day prior to the at least one electronic message being received.

13. A method as claimed in any one of claims 7 to 9, wherein the at least one electronic message is selected by receiving input indicating a block of time that includes the time at which the at least one electronic message was received, the block of time being customizable.

14. A method as claimed in claim 7, wherein providing identification of the electronic message comprises sending a message ID of the at least one electronic message to the messaging server (16).

15. A non-transitory computer-readable medium comprising instructions executable on a processor (14) for implementing the method of claim 7 or claim 8.

## Amended claims

### Amended claims in accordance with Rule 137(2) EPC.

**1.** A communication device (10) comprising:
a processor (14) for rendering a message list for display on a display screen (20) in communication with the processor (14), the message list comprising indications of electronic messages received by the communication device (10); and
an input device (38) in communication with the processor (14), the processor (14) configured to receive an input from the input device (38) to select at least one electronic message from the message list, and further configured to send identification of an electronic address associated with the at least one electronic message and an out-of-office reply setting to a messaging server (16), the messaging server (16) for generating and sending an out-of-office notification to the electronic address.

**2.** A communication device (10) as claimed in claim 1, wherein when the at least one message was received by the messaging client (50), the out-of-office reply setting was inactive.

**3.** A communication device (10) as claimed in claim 1, wherein the processor (14) is further configured to select the at least one electronic message by receiving input indicating a time of day prior to the at least one electronic message being received.

**4.** A communication device (10) as claimed in claim 1, wherein the processor (14) is further configured to select the at least one electronic message by receiving input indicating a block of time that includes the time at which the at least one electronic message was received, the block of time being custom izable.

**5.** A communication device (10) as claimed in claim 1, wherein the processor (14) is further configured to send a message ID of the at least one electronic message to the messaging server (16).

**6.** A communication device (10) as claimed in claim 1, wherein the communication device (10) is one of: a handheld device, a laptop computer or a desktop computer.

**7.** A method comprising:
receiving, at a messaging client (50), a selection of at least one electronic message previously received by the messaging client (50), the at least one electronic message being associated with an electronic address; and
in response to receiving the selection providing an identification of the electronic address and an identification of an out-of-office setting to a messaging server (16), the messaging server (16) for generating and sending an out-of-office notification to the electronic address.

**8.** A method comprising:
receiving, at a messaging server (16), an input identifying at least one electronic message previously received by a messaging client (50);
receiving, at the messaging server (16), an input identifying an out-of-office setting to be applied to the at least one electronic message; and
generating and sending an out-of-office notification to an electronic address associated with the at least one electronic message.

**9.** A method as claimed in claim 7 or claim 8, wherein when the at least one message was received by the messaging client (50), the out-of-office reply setting was inactive.

**10.** A method as claimed in claim 7 or claim 8, wherein the at least one electronic message is selected from a list of received messages, the list of received messages being rendered for display on a display screen (20) of a communication device (10).

**11.** A method as claimed in claim 10, wherein the at least one electronic message is selected using an input device of the communication device (10).

**12.** A method as claimed in claim 7 or claim 8, wherein the at least one electronic message is selected by receiving input indicating a time of day prior to the at least one electronic message being received.

**13.** A method as claimed in claim 7 or claim 8, wherein the at least one electronic message is selected by receiving input indicating a block of time that includes the time at which the at least one electronic message was received, the block of time being customizable.

**14.** A method as claimed in claim 5, wherein providing identification of the electronic message comprises sending a message ID of the at least one electronic message to the messaging server (16).

**15.** A non-transitory computer-readable medium comprising instructions executable on a processor (14) for implementing all the steps of the method of claim 7 or claim 8.
